# EUROPÄISCHE PATENTSCHRIFT

(11) **EP 0 412 257 B1**
(45) Veröffentlichungstag und Bekanntmachung des Hinweises auf die Patenterteilung: **10.11.1993**
(21) Anmeldenummer: 90110991.8
(22) Anmeldetag: 11.06.1990
(51) Int. Cl.: F16B 13/04

(54) **Spreizdübel**
Expansion plug
Cheville d'expansion

(30) Priorität: 09.08.1989 DE 3926229
(43) Veröffentlichungstag der Anmeldung: 13.02.1991
(73) Patentinhaber: fischerwerke Artur Fischer GmbH & Co. KG, D-72178 Waldachtal (DE)
(72) Erfinder: Fischer, H.C. Artur, Prof., Dr., D-7244 Waldachtal 3/Tumlingen (DE)

(56) Entgegenhaltungen:
- EP-A- 0 279 936
- EP-A- 0 297 228
- DE-A- 2 417 541

## Beschreibung

Die Erfindung betrifft einen Spreizdübel gemäß der Gattung des Hauptanspruchs.

Zur Befestigung von Gegenständen, Lattenkonstruktionen oder dergleichen an Wänden oder Decken werden Spreizdübel verwendet, die in Bohrlöcher des entsprechenden Mauerwerks einsetzbar sind. Vorzugsweise werden die Bohrlöcher mit Hinterschneidungen ausgebildet, so daß die Spreizdübel mit ihrem Spreizteil formschlüssig im Bereich der Hinterschneidung eingreifen können. Auf diese Weise ist eine besonders sichere Befestigung möglich.

Ein derartiger Spreizdübel besitzt eine längsgeschlitzte Spreizhülse, die auf einen Spreizkörper auftreibbar ist. Das Auftreiben der Spreizhülse kann mittels einer Schlagbohrmaschine und einem geeigneten Werkzeug erfolgen, mit dem der Schaft des Spreizdübels beim Einschlagvorgang in der Betriebsart "Hammerschlag" gleichzeitig in Drehung versetzt wird. Die Spreizhülse dreht sich dabei auf den Spreizkörper auf und spreizt mit zunehmender Eindringtiefe auf. Sobald die Spreizhülse mit der Bohrlochwandung in Berührung kommt bewirkt die Drehung der Spreizhülse einen unerwünschten Ausreibeffekt, der die bereits vorhandene Hinterschneidung zusätzlich erweitern kann. Unter ungünstigen Bedingungen kann dadurch eine zu starke Erweiterung der Hinterschneidung auftreten, wodurch eine optimale Befestigung des Spreizdübels zumindest erschwert wird.

Der Erfindung liegt die Aufgabe zugrunde, einen Spreizdübel zu schaffen, bei dem die Spreizhülse sich während des Eintreibvorgangs vom Befestigungsschaft des Spreizdübels lösen kann.

Die Lösung dieser Aufgabe wird durch die im Hauptanspruch angegebenen Merkmale erhalten. Zwischen der Spreizhülse und dem Befestigungsschaft ist eine Sollbruchstelle ausgebildet, die bei ausreichender Verspannung der Spreizhülse im Bohrloch abreißt, so daß ab diesem Zeitpunkt die Spreizhülse vom Befestigungsschaft nicht mehr zwangsweise mitgedreht wird. Die Sollbruchstelle weist eine so dünne Wandstärke auf, daß während des Aufschiebens der Spreizhülse auf den Spreizkonus eine Verformung der Sollbruchstelle auftritt. Die Wandstärke der Sollbruchstelle muß dabei jedoch so groß sein, daß ausreichend große axiale Kräfte auf die Spreizhülse übertragen werden können, damit der Aufschiebevorgang eingeleitet werden kann. Die Sollbruchstelle bewirkt, daß die Spreizhülse sich nach dem Abreißen vom Befestigungsschaft nicht mehr mit diesem mitdreht und somit kein unerwünschtes zusätzliches Ausreiben der Hinterschneidung auftritt.

Die Sollbruchstelle wird vorzugsweise als dünnwandiger Hülsenabschnitt zwischen Spreizbereich und Befestigungsschaft des Spreizdübels ausgebildet. Dabei wird die Wandstärke der Sollbruchstelle durch die Größe der Längsbohrung und durch die Tiefe einer außen angebrachten Ringnut bestimmt. Je nach Außendruchmesser des Spreizdübels können Wandstärken zwischen 0,2 mm und 1 mm für die Sollbruchstelle zweckmäßig sein. Die axiale Länge der Sollbruchstelle kann dabei 1 mm bis 5 mm betragen.

Die Sollbruchstelle hat nicht nur den Vorteil, daß ein unerwünschtes zusätzliches Ausreiben der Hinterschneidung beim Auftreiben der Spreizhülse vermieden wird, sondern stellt auch einen axialen Toleranzausgleich dar. So kann der Befestigungsschaft noch geringfügig axial in das Bohrloch eingedreht werden, obgleich die Spreizhülse bereits ihre Endposition erreicht hat. Dies ist dadurch möglich, daß die dünne Wandung der Sollbruchstelle axial verformbar ist, wodurch der Befestigungsschaft axial gegen die Spreizhülse eingetrieben werden kann.

Besonders vorteilhaft ist es, die Längsbohrung des Spreizdübels im Bohrschaft mit einem größeren Druchmesser zu versehen als die für die Aufnahme des Gewindestabs des Spreizelements vorgesehene Gewindebohrung. Dadurch entsteht im Befestigungsschaft eine ringförmige Stufe, an der eine Einschlagwerkzeug ansetzbar ist. Als Einschlagwerkzeug kann eine in ein Bohrfutter einer Schlagbohrmaschine eingespannter Dorn dienen, der an seiner Stirnseite eine Rändelung oder dergleichen aufweist, die an der gennanten Stufe angreift und den Befestigungsschaft bein dem Eintreibvorgang in Drehung versetzt.

Der Befestigungsschaft kann ein Innengewinde oder ein angeformtes Befestigungselement, beispielweise einen Schraubenkopf, aufwiesen. Es zeigen.

Die erfindung wird nachfolgend anhand der Zeichnung näher erläutert. Es zeigen:
Figur 1 einen erfindungsgemäßen Spreizdübel teilweise im Schnitt und ein Montagewerkzeug und
Figur 2 den in einem Bohrloch eines Mauerwerks verankerten Spreizdübel.

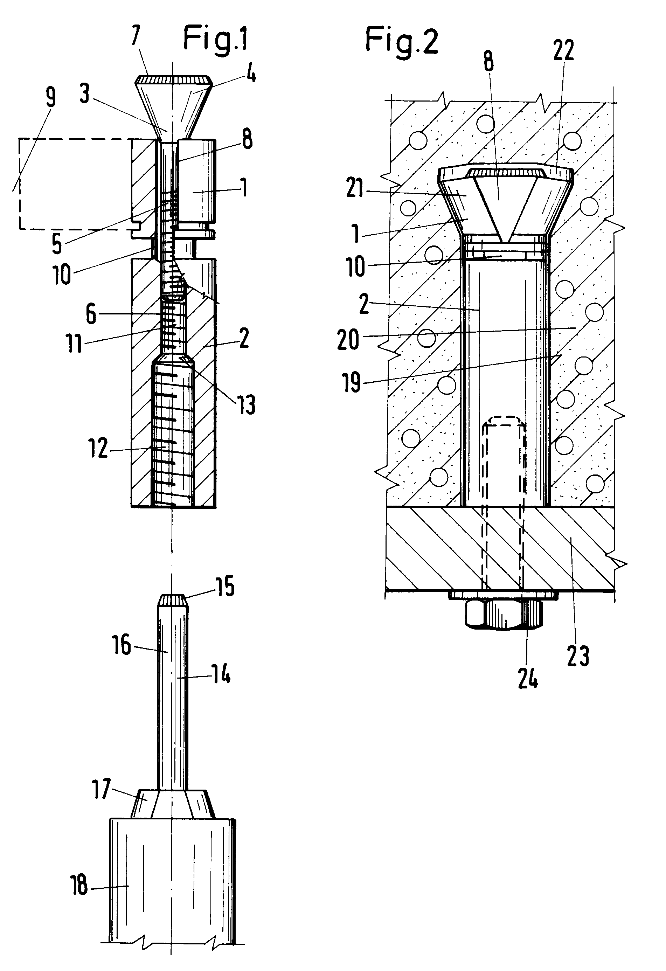

Der in Figur 1 dargestellte Spreizdübel besteht aus einer Spreizhülse 1, einem mit der Spreizhülse einstückig verbundenen Befestigungsschaft 2 und einem Spreizelement 3. Das Spreizelement 3 hat einen Spreizkonus 4 und einen angeformten Gewindestab 5, der in eine am Befestigungsschaft 2 ausgebildete Gewindebohrung 6 eingreift. An der freien Stirnseite des als Spreizkonus ausgebildeten Spreizkörpers 4 ist am Rand eine Rändelung 7 ausgebildet.

Die Spreizhülse 1 weist an ihrer Umfangsfläche verteilt angeordnete Längsschlitze 8 auf, die sich über die Länge des Spreizbereichs 9 erstrecken.

Die Verbindung zwischen Spreizhülse 1 und Befestigungsschaft 2 wird durch einen dünnwandigen Hülsenabschnitt 10 gebildet, der eine Sollbruchstelle zwischen Spreizhülse 1 und Befestigungsschaft 2 darstellt.

Der Befestigungsschaft 2 weist zwei im Durchmesser unterschiedliche Längsbohrungen 11, 12 auf, so daß an deren Übergang eine ringförmige Stufe 13 entsteht. An dieser Stufe kann ein Einschlagwerkzeug 14 angesetzt werden, welches stirnseitig mit einer Rändelung 15 versehen ist. Das Einschlagwerkzeug ist als Dorn 16 ausgebildet, der für den Eintreibvorgang in das Bohrfutter 17 einer Schlagbohrmaschine 18 eingespannt ist. Beim Eintreibvorgang wird der Dorn 16 mit seiner Rändelung 15 auf die ringförmige Stufe 13 aufgedrückt. Durch Drehung bei gleichzeitiger Betriebsart "Hammerschlag" wird der Spreizdübel in ein Bohrloch 19 eingetrieben, bis er die Position erreicht hat, wie sie in Figur 2 dargestellt ist.

Der in Figur 2 dargestellte Spreizdübel ist im Bohrloch 19 eines Mauerwerks 20 verankert, wobei die Spreizsegmente 21 der Spreizhülse 1 formschlüssig in eine Hinterschneidung 22 eingreifen. Beim Eintreibvorgang liegt der Spreizkörper 4 mit seiner Rändelung 7 am Bohrlochgrund an, so daß sich der Spreizkörper 4 nicht mit dem Befestigungsschaft 2 mitdreht. Nach Abreißen der Sollbruchstelle 10 dreht sich auch die Spreizhülse 1 nicht mehr mit dem Befestigungsschaft 2 mit. Durch die vom Befestigungsschaft 2 in der Endphase des Eintreibvorganges auf den Hülsenabschnitt 10 augeübte axiale Kraft wird der Hülsenabschnitt 10 verformt, weshalb der Abstand zwischen Spreizhülse 1 und Befestigungsschaft 2 in Figur 2 kleiner ist als in Figur 1. Durch die Möglichkeit, den Hülsenabschnitt 10 axial verformen zu können, wird ein Toleranzausgleich erreicht und ein sicheres Verspannen eines zu befestigenden Gegenstandes 23 mittels einer Befestigungsschraube 24 erreicht.

## Patentansprüche

1. Spreizdübel mit einem in eine Spreizhülse einführbaren Spreizelement, das aus einem Spreizkonus und einem in den Spreizdübel ragenden Gewindestab besteht und mit einem ein Innengewinde aufweisenden Befestigungsschaft, in den der Gewindestab des Spreizelements eingreift, **dadurch gekennzeichnet**, daß die Spreizhülse (1) und der Befestigungsschaft (2) ein einstückiges Metallteil sind, und daß zwischen Spreizhülse (1) und Befestigungsschaft (2) eine Sollbruchstelle ausgebildet ist.

2. Spreizdübel nach Anspruch 1, **dadurch gekennzeichnet**, daß die Sollbruchstelle ein dünnwandiger Hülsenabschnitt (10) ist.

3. Spreizdübel nach Anspruch 2, **dadurch gekennzeichnet**, daß der Hülsenabschnitt (10) durch eine Längsbohrung und eine an der Mantelfläche des Spreizdübels ausgebildete Ringnut hergestellt ist.

4. Spreizdübel nach einem der vorhergehenden Ansprüche, **dadurch gekennzeichnet**, daß die Wandstärke der Sollbruchstelle zwischen 0,2 mm bis 1,5 mm beträgt, wobei bei kleinem Außendruchmesser des Spreizdübels eine dünnwandigere Sollbruchstelle ausgebildet ist als bei einem Spreizdübel mit großem Außendurchmesser.

5. Spreizdübel nach einem der vorhergehenden Ansprüche, **dadurch gekennzeichnet**, daß die Längsbohrung (12) des Spreizdübels in dem Teil des Befestigungsschaftes (2), der der Spreizhülse (1) abgewandt ist, einen größeren Durchmesser hat als die für die Aufnahme des Gewindestabs (5) vorgesehene Gewindebohrung (11).

6. Spreizdübel nach einem der vorhergehenden Ansprüche, **dadurch gekennzeichnet**, daß die der Spreizhülse (1) abgewandte Längsbohrung (12) des Befestigungsschaftes (12) ein Innengewinde für die Aufnahme eines Befestigungselements (24) hat.

7. Spreizdübel nach einem der Ansprüche 1 bis 5, **dadurch gekennzeichnet**, daß am freien Ende des Befestigungsschafts ein Befestigungselement angeformt ist.

8. Spreizdübel nach einem der vorhergehenden Ansprüche, **dadurch gekennzeichnet**, daß die Sollbruchstelle eine axiale Länge zwischen 1 mm bis 5 mm hat.

## Claims

1. An expansible plug with an expander element insertable in an expansible sleeve, which expander element consists of an expander cone and a threaded rod projecting into the expansible plug, and with a fixing shank having an internal thread in which the threaded rod of the expander element engages, characterized in that the expansible sleeve (1) and the fixing shank (2) are a one-piece metal part, and between the expansible sleeve (1) and the fixing shank (2) there is formed a predetermined rupture zone.

2. An expansible plug according to claim 1, characterized in that the predetermined rupture zone is a thin-walled portion (10) of the sleeve.

3. An expansible plug according to claim 2, characterized in that the sleeve portion (10) is formed by a longitudinal bore and an annular groove formed on the circumferential surface of the expansible plug.

4. An expansible plug according to one of the preceding claims, characterized in that the wall thickness of the predetermined rupture zone is between 0.2 mm and 1.5 mm, the wall of the predetermined rupture zone being thinner when the external diameter of the expansible plug is small than when the expansible plug has a large external diameter.

5. An expansible plug according to one of the preceding claims, characterized in that in the part of the fixing shank (2) remote from the expansible sleeve (1), the longitudinal bore (12) of the expansible plug has a larger diameter than the threaded bore (11) provided for receiving the threaded rod (15).

6. An expansible plug according to one of the preceding claims, characterized in that the longitudinal bore (12) of the fixing shank (12) remote from the expansible sleeve (1) has an internal thread for receiving a fixing element (24).

7. An expansible plug according to one claims 1 to 5, characterized in that at the free end of the fixing shank there is formed a fixing element.

8. An expansible plug according to one of the preceding claims, characterized in that the predetermined rupture zone has an axial length between 1 mm and 5 mm.

## Revendications

1. Cheville à expansion, comportant un élément d'expansion susceptible d'être introduit dans une douille d'expansion, lequel élément d'expansion est constitué par un cône d'expansion et une tige filetée qui dépasse dans la cheville à expansion, et comporte un fût de fixation présentant un filetage intérieur dans lequel se visse la tige filetée de l'élément d'expansion, caractérisée en ce que la douille d'expansion (1) et le fût de fixation (2) forment une seule et même pièce métallique et en ce qu'entre la douille d'expansion (1) et le fût de fixation (2) est réalisé un emplacement de rupture volontaire.

2. Cheville à expansion selon la revendication 1, caractérisé en ce que l'emplacement de rupture volontaire est une partie (10) à paroi mince de la douille.

3. Cheville à expansion selon la revendication 2, caractérisé en ce que la partie (10) de douille est obtenue au moyen d'un alésage longitudinal et d'une gorge circulaire pratiquée dans la surface d'enveloppe extérieure de la cheville à expansion.

4. Cheville à expansion selon une des revendications précédentes, caractérisée en ce que l'épaisseur de paroi de l'emplacement de rupture volontaire est comprise entre 0,2 mm et 1,5 mm, l'emplacement de rupture volontaire présentant, dans le cas d'une cheville à expansion de faible diamètre extérieur, une paroi plus mince que dans le cas d'une cheville à expansion de fort diamètre extérieur.

5. Cheville à expansion selon une des revendications précédentes, caractérisée en ce que l'alésage longitudinal (12) de la cheville à expansion présente, dans la partie du fût de fixation (3), située à l'opposé de la douille d'expansion (1), un plus grand diamètre que celui de l'alésage fileté (11) prévu pour recevoir la tige filetée (5).

6. Cheville à expansion selon une des revendications précédentes, caractérisée en ce que l'alésage longitudinal (12) du fût de fixation (2), situé à l'opposé de la douille d'expansion (1),présente un filetage intérieur destiné à recevoir un élément de fixation (24).

7. Cheville à expansion selon une des revendications 1 à 5, caractérisée en ce qu'un élément de fixation est formé sur l'extrémité libre du fût de fixation.

8. Cheville à expansion selon une des revendications précédentes, caractérisée en ce que l'emplacement de rupture volontaire présente une longueur axiale comprise entre 1 mm et 5 mm.
